(19) Europäisches Patentamt

European Patent Office

Office européen des brevets

(11) **EP 1 063 004 A1**

(12) **EUROPEAN PATENT APPLICATION**
published in accordance with Art. 158(3) EPC

(43) Date of publication:
27.12.2000 Bulletin 2000/52

(51) Int. Cl.[7]: **B01D 69/08**, B01D 69/12

(21) Application number: 99907929.6

(86) International application number:
PCT/JP99/01245

(22) Date of filing: 15.03.1999

(87) International publication number:
WO 99/46034 (16.09.1999 Gazette 1999/37)

(84) Designated Contracting States:
**DE FR GB IT**

(30) Priority: 13.03.1998 JP 6364898

(71) Applicant:
**Mitsubishi Rayon Co., Ltd.**
**Tokyo 108-8506 (JP)**

(72) Inventors:
• **UENISHI, M.,**
**Mitsubishi Rayon Co., Ltd.**
**Hiroshima 739-0693 (JP)**
• **YOSHIDA, K.,**
**Mitsubishi Rayon Co., Ltd.**
**Hiroshima 739-06693 (JP)**

• **FUKUSHIMA, N.,**
**Mitsubishi Rayon Co., Ltd.**
**Otake-shi, Hiroshima 739-0693 (JP)**
• **FUJIKI, H.,**
**Mitsubishi Rayon Co., Ltd.**
**Otake-shi Hiroshima 739-0693 (JP)**
• **MISOO, K.,**
**Mitsubishi Rayon Co., Ltd.**
**Toyohashi-shi Ai chi 440-8601 (JP)**
• **SHIBATA, N.**
**1-2, Ushikawadori 4-chome Toyohashi-s (JP)**

(74) Representative: **HOFFMANN - EITLE**
**Patent- und Rechtsanwälte**
**Arabellastrasse 4**
**81925 München (DE)**

(54) **COMPOSITE HOLLOW FIBER MEMBRANE AND ITS MANUFACTURE**

(57) A hollow fiber membrane is provided that can be used for the treatment of water such as in a home water purifier and an industrial water filtration module, and for air treatment such as in a dust filter. The hollow fiber membrane of the present invention is a composite hollow fiber membrane made by stacking three or more layers of membranes in three-dimensional net structure having a plurality of micropores formed from stacked lamella and microfibrils connected with the stacked lamella. The composite hollow fiber membrane also has a dense layer, that is thinner than the outermost layer and the innermost layer and has micropores of a mean pore diameter smaller than that of the micropores of the outermost layer and the innermost layer, as an intermediate layer disposed between the outermost layer and the innermost layer. The hollow fiber membrane achieves high separation accuracy and a high flow rate of permeation.

FIG. 2

THE DIRECTION OF STRETCHING

EP 1 063 004 A1

## Description

Technical Field

The present invention relates to a hollow fiber membrane that can be used for the treatment of water such as in home water purifiers and industrial water filtration modules, and for air treatment such as in dust filters.

The present application is based on Japanese Patent Application No. H10-63648 filed in Japan, the content of which is incorporated herein by reference.

Background Art

Microporous membranes are widely used in liquid filters for such applications as water purification and waste-water treatment, and in air filters.

A number of technologies have been proposed for the microporous membrane.

For example, Japanese Unexamined Patent Application, First Publication (A) No. Sho 57-66114 discloses a polyethylene microporous hollow fiber membrane comprising a plurality of slit-like micropores comprising microfibrils oriented in the longitudinal direction of the hollow fiber membrane and knotted portions of a stacked lamellar crystals oriented in the longitudinal direction of the hollow fiber membrane.

However, the polyethylene microporous hollow fiber membrane has insufficient separation characteristics, despite a high level of water permeation.

Japanese Examined Patent Application, Second Publication (82) No. Hei 3-70539 also discloses a hydrophilic polyethylene microporous membrane comprising a microporous membrane covered with an ethylene-vinyl alcohol copolymer.

However, this microporous membrane cannot provide improved separation characteristics while maintaining a high level of water permeability.

Japanese Examined Patent Application, Second Publication (B2) No. Sho 62-44046 and Japanese Unexamined Patent Application, First Publication (A) No. Sho 62-269706 disclose composite hollow fiber membranes made by stacking a plurality of membranes that have slit-like micropores of different sizes formed therein.

These composite hollow fiber membranes have, however, insufficient water permeability in practice.

To solve such problems as those described above, International Publication WO95/19219 discloses a polyolefin composite microporous membrane comprising a dense layer having micropores of small diameter and providing a separating function and a support layer having micropores of large diameter and providing a reinforcing function. Specifically, the disclosure proposes (1) a membrane of a two-layer structure comprising a dense layer disposed on the outside of a hollow fiber membrane and a support layer disposed on the inside thereof; (2) a membrane of two-layer structure comprising a dense layer disposed on the inside of a hollow fiber membrane and a support layer disposed on the outside thereof; and (3) a membrane of a three-layer structure comprising support layers disposed in the innermost and outermost layers of a hollow fiber membrane and a dense layer disposed therebetween.

However, the membrane of two-layer structure (1) comprising a dense layer disposed on the outside of the hollow fiber membrane and the support layer disposed on the inside thereof has the problems that, when water to be treated is supplied from the outside of the hollow fiber membrane, the dense layer is easily clogged with solid matter that leads to shorter filtration life of the filter.

Although the membrane of the two-layer structure (2) comprising the dense layer disposed on the inside of the hollow fiber membrane and the support layer disposed on the outside thereof can extend the filtration life of the filter longer than the membrane (1) of two-layer structure, it is insufficient in practice in terms of the separation characteristics (fraction particle blocking ratio). When a composite non-stretched hollow fiber is spun for producing a composite microporous membrane, in general, the molten polymer located inside of the fabric is cooled later than the molten polymer located outside of the fabric. Moreover, heat trapped in the inner space of the hollow fiber is cannot easily dissipate, which leads to inefficient cooling of the inside of the fabric. As a consequence, the molten polymer located inside of the fabric is likely to undergo the crystallization of the chain of polymer molecules without being subjected to sufficient tensile stress (stress proportional to viscosity), thus crystallizing in a state of poor degree of ordered orientation in the longitudinal direction of the fiber. When the non-stretched hollow fiber in a disturbed state of crystal orientation is stretched, the dimensions (particularly, the distance between microfibril bundles) of the micropores after stretching tend to be non-uniformly distributed in the direction of thickness, which is likely to have a detrimental effect on the fractionation accuracy.

Even in the membrane of the three-layer structure (3) comprising the support layers disposed in the innermost and outermost layers of the hollow fiber membrane and the dense layer disposed therebetween, a non-stretched layer that corresponds to the dense layer is cooled down after a time delay in the process of spinning the composite non-stretched hollow fiber, and crystallization is likely to occur under conditions of a lower degree of order in crystal orientation with respect to the longitudinal direction of the fiber. When the fiber is stretched under these conditions, the sizes of the micropores (particularly the distance between microfibril bundles) after stretching tend to be non-uniformly distributed in the direction of thickness, leading to lower separation characteristics. Also, when the support layers become thicker, length of the microfibrils and the distance between the microfibril bundles of the support layers tend to become irregular in the direction of thickness, and the support layer is likely to be clogged with solid matter in portions where the distance between microfibril bundles is narrow.

Disclosure of Invention

The present invention has been made to solve the problems described above, and an object thereof is to provide a hollow fiber membrane that is less likely to be clogged, has a long filtration life and high separation characteristics, allows a large flow rate of permeation and is suited to the filtration of both water and air, and a method of producing the same.

The present invention is based on the inventors' finding that improvements in the filtration life and separation characteristics of a filter can be achieved by making a membrane having overall porosity of not less than 75% by volume and forming micropores of nearly uniform size in the support layer and the dense layer, and that a hollow fiber membrane comprising three or more layers with a dense layer disposed as an intermediate layer is effective in achieving these improvements.

The composite hollow fiber membrane of the present invention is made by stacking three or more layers of membranes that have a three-dimensional net structure having a plurality of micropores formed from stacked lamella and microfibrils connected with the stacked lamella, and has a dense layer that is thinner than the outermost layer and the innermost layer and has micropores of a mean pore diameter smaller than that of the micropores of the outermost layer and the innermost layer, as an intermediate layer disposed between the outermost layer and the innermost layer.

The composite hollow fiber membrane has an overall porosity of preferably not less than 75% by volume.

The isothermal crystallization time $\tau s$ of the resin of the outermost layer and the innermost layer and isothermal crystallization time $\tau p$ of the resin used in the dense layer preferably satisfy the following relationship.

$$1 < \tau p/\tau s < 100$$

The outermost layer and the innermost layer have a mean microfibril length preferably in a range from 0.5 to 10 μm and a mean distance between microfibril preferably in a range from 0.1 to 0.6 μm.

Similarly, the dense layer has a mean microfibril length preferably in a range from.0.2 to 5 μm and a mean distance between microfibril preferably in a range from 0.02 to 0.3 μm.

The outermost layer and the innermost layer that serve as the support layers each have a thickness preferably in a range from 5 to 50 μm and the dense layer has a thickness preferably in a range from 3 to 15 μm.

Further, it is also preferable that a cover layer made of hydrophilic polymer is formed and that the microfibrils are divided into groups of a plurality of pieces that are bundled together.

The initial water permeation amount is preferably 25.0 L/(m$^2$ • hr • kpa) or higher.

The composite hollow fiber membrane of the present invention is produced by co-extrusion of a molten crystalline polymer through a die having three or more discharge ports disposed in a concentric configuration, spinning a composite non-stretched hollow fiber comprising three or more stacked layers, and stretching the fibers at a total draw ratio of at least 5.

It is preferable to co-extrude the molten crystalline polymer, spin and stretch the composite non-stretched hollow fiber having the outermost layer and the innermost layer (support layers) having a degree of crystal orientation fc in a range from 0.8 to 0.99 and the intermediate layer (dense layer) having a degree of crystal orientation in a range from 0.2 to 0.75.

According to the present invention, the hollow fiber membrane has high separation accuracy and achieves sufficient bacteria separation characteristics when used in filtering water. Moreover, a high flow rate of permeation can also be achieved at the same time. The hollow fiber membrane also allows an accumulated flow rate of permeation which is sufficient in practice and is less likely to be clogged, thus making it possible to extend the filtration life of the membrane module and design the module with less membrane area.

A composite hollow fiber membrane that has been processed to make it hydrophilic, in particular, is suited for the filtration of water.

Also when the composite hollow fiber membrane is made by using a resin that has a particular isothermal crystallization time, the degree of orientation and the size of the crystal can be controlled, thus making it possible to make micropores of desired sizes in the dense layer and in the support layer, thereby stably improving both the water permeability and separation accuracy.

The filtration life of the filter can be improved further, particularly by making the initial water permeation amount 25.0 L/(m$^2$ · hr · kpa) or higher.

According to the method of the present invention, the composite hollow fiber membrane described above can be produced easily and, by controlling the degree of crystal orientation in a particular range, the composite hollow fiber membrane of high performance described above can be produced reliably.

Brief Description of Drawings

Fig. 1 is a perspective view partially showing an example of the composite hollow fiber membrane of the present invention.
Fig. 2 is an enlarged plan view of the layers constituting the composite hollow fiber membrane.
Fig. 3 is a sectional view showing an example of the layer constitution.
Fig. 4 is a sectional view showing an example of the layer constitution.
Fig. 5 is an enlarged plan view of the layers constituting the hydrophilized composite hollow fiber membrane.
Fig. 6 is a plan view showing a method of measuring the mean pore diameter of the micropores.
Fig. 7 is a graph showing the blocking rate versus the diameter of the latex particles.

Best Mode for Carrying Out the Invention

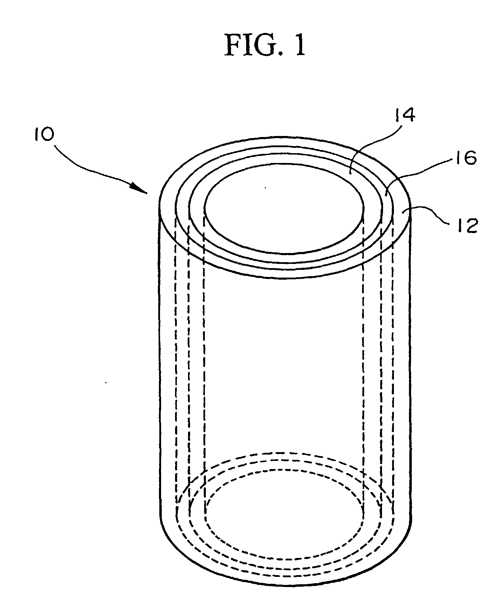

The composite hollow fiber membrane of the present invention is made by stacking three or more layers of membranes that have a three-dimensional net structure, comprising an outermost layer, an innermost layer and an intermediate layer disposed therebetween. The composite hollow fiber membrane is made in a three-layer structure when provided with one intermediate layer, or in a structure of four or more layers when provided with two or more intermediate layers. According to the present invention, it is indispensable that the innermost layer and the outermost layer both serve as support layers and a dense layer is provided as the intermediate layer. Therefore, when the intermediate layer consists of one layer, the composite hollow fiber membrane 10 is made with a three-layer structure of the outermost layer 12, innermost layer 14 and the dense layer 16 as shown in Fig. 1.

The layers are made of various thermoplastic resins such as polyamide, and polyolefin is most preferable. For example, materials that have a high degree of crystallinity and few chains may be employed as high-density polyethylene, such as isotactic polypropylene, poly-4-methly-1-pentene, poly-3-methylbutene-1 and polyvinylidene fluoride and mixtures thereof.

The density of polyethylene is preferably 0.955 g/cm$^3$ or higher, and more preferably 0.960 g/cm$^3$ or higher as measured by a method specified in the Japanese Industrial Standard (JIS) K6760. When the density is less than 0.955 g/cm$^3$, it becomes difficult to form the micropores by stretching.

For the isotactic polypropylene, one having a tacticity of 96% or higher is preferable and, for poly-4-methly-1-pentene, one having a density in a range from 0.830 g/cm$^2$ to 0.835 g/cm$^2$ is preferable. Materials that have such levels of density and stereoregularity make it easier to obtain such the degree of crystal orientation fc, to be described later, that falls in a particular range.

The support layer and the intermediate layer need to be made at the same spinning temperature and spinning draft, and are preferably made of the same material, but this is not restrictive. Optimum conditions may be chosen in a range of spinning temperatures from 170 to 270°C and a range of draft ratios from 100 to 600, depending on the type of polymer to be used.

It is also desirable for the support layer and the intermediate layer to have the same values of melt flow index (MI: ASTM D-1238), i.e., one index representing the viscosity in the molten state. The melt flow index is preferably in a range from 0.1 to 50 g/10 min., and more preferably in a range from 0.3 to 15 g/10 min. When the melt flow index is lower than 0.1 g/10 min., excessively high viscosity in the molten state makes it difficult to form the desired shape and therefore to form the hollow fiber membrane having micropores. When the melt flow index is higher than 50 g/10 min., on the other hand, excessively low viscosity in the molten state makes the formation unstable.

Among the polymers that can be used, specific products of high-density polyethylene used for the support layer include for example "SUNTEC B161" manufactured by Asahi Chemical Industry Co., Ltd. (melt flow index 1.3 g/10 min. and density 0.966 g/cm$^3$), "High-density Polyethylene 310E" manufactured by Idemitsu Petrochemical Co., Ltd. (melt flow index 1.2 g/10 min. and density 0.965 g/cm$^3$) and "High-density Polyethylene H8530" manufactured by Mitsubishi Chemical Co., Ltd. (melt flow index 0.35 g/10 min. and density 0.965 g/cm$^3$).

Polymers that can be used for the dense layer include for example "High-density Polyethylene NIPORO HARD 5110" manufactured by Tohso Corporation (melt flow index 0.90 g/10 min. and density 0.960 g/cm$^3$), "High-density Polyethylene S160S" manufactured by Asahi Chemical Industry Co., Ltd. (melt flow index 0.80 g/10 min. and density 0.962 g/cm$^3$) and "E220R" manufactured by Chisso Corporation (melt flow index 0.65 g/10 min. and density 0.960

g/cm$^3$).

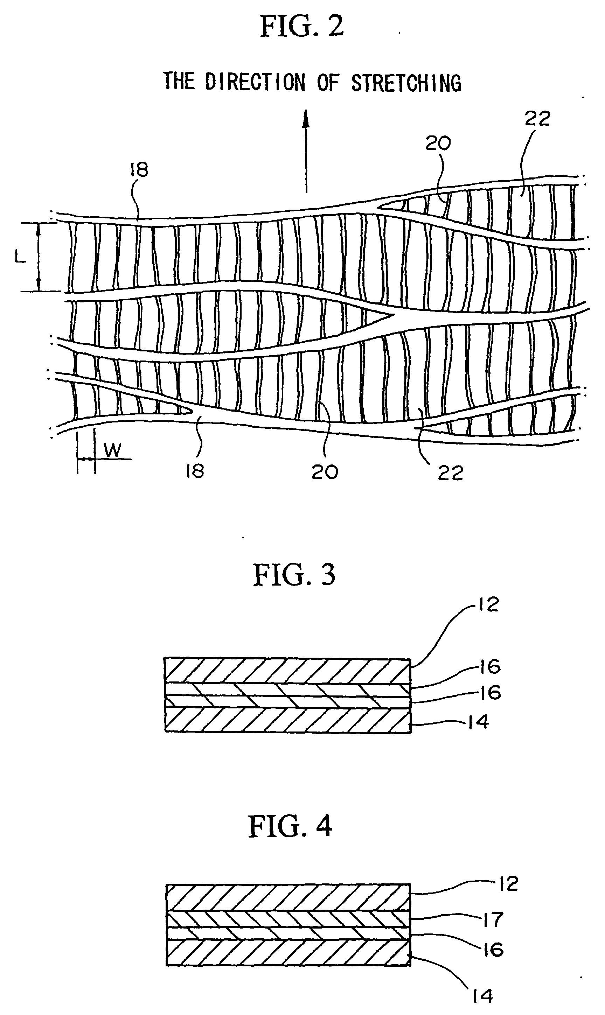

According to the present invention, the layers have numerous micropores formed therein by stretching the hollow fiber membrane that has been spun. Specifically, when fibers made by melt spinning are stretched, stress is concentrated in amorphous portions which are structurally weak, resulting in cleavage between stacked lamella and, at the same time, partial delamination of the stacked lamella, thereby collectively forming the microfibrils. Thus, as shown in Fig. 2, slit-like micropores 22, 22,... are formed between a number of microfibrils 20, 20,... aligned in the direction of stretching and the knotted portions of the stacked lamella 18, 18,... where the former are connected.

The pore diameter, namely the size of the micropores 22 is generally represented by two parameters; the mean value of lengths L of the microfibrils 20 (which corresponds to the dimension of the longer side of the slit-like micropore or the distance between stacked lamella), and the mean value of distance W between microfibrils.

When filtering with the hollow fiber membrane, the flow rate of permeation depends mainly on the length L of the microfibrils, with the flow rate of permeation increasing as the microfibril become longer. On the other hand, the separation characteristics depend mainly on the distance W between microfibrils, with the separation characteristics becoming higher as the distance between microfibril bundles decreases.

In the composite hollow fiber membrane of the present invention, both a high flow rate of permeation and high separation characteristics are achieved by disposing the support layers having micropores of relatively large diameters as the outermost layer and the innermost layer and disposing the dense layer having micropores of relatively small diameter as the intermediate layer, thereby improving the filtration performance.

Thus according to the present invention, the mean length of the microfibrils and the mean distance between microfibril bundles with regard to the micropores formed in the dense layer are both smaller than the mean length of microfibrils and the mean distance between microfibril bundles with regards to the micropores formed in the support layer, respectively.

In the composite hollow fiber membrane of the present invention, layer thickness can be considered to remain almost unchanged before and after the stretching process, and the thickness of the support layer is preferably in a range from 5 to 50 μm. When the thickness is less than 5 μm, the membrane can easily deform due to insufficient resistance to external pressure. When the thickness is greater than 50 μm, on the other hand, there can be a significant difference in the cooling rate across the thickness in the outer layer during the spinning process that may lead to deterioration in the degree of the order in crystal orientation, thus causing an irregular distribution of the size of the micropore in the direction of thickness. In the composite hollow fiber membrane of the present invention, although the support layer is thinner than those of the prior art, the composite hollow fiber membrane has enough strength to resist collapsing in spite of the thickness being not greater than 50 μm, due to the multiple layer structure having three or more layers.

The thickness of the dense layer must be less than that of the support layer. By making the dense layer thinner than the support layer, the flow rate of permeation can be increased and the filtration life can be increased. The thickness of the dense layer is preferably in a range from 3 to 15 μm. This is because a thickness less than 3 μm makes it difficult to carry out melt spinning, and a thickness greater than 15 μm leads to insufficient flow rate of permeation through the composite hollow fiber membrane.

The support layer preferably has a mean microfibril length in a range from 0.5 to 10 μm and mean distance between microfibril bundles in a range from 0.1 to 0.6 μm. A microfibril length less than 0.5 μm or a distance between microfibril bundles less than 0.1 μm leads to insufficient flow rate of permeation through the entire composite hollow fiber membrane. A microfibril length larger than 10 μm tends to lead to insufficient rupture elongation after stretching the hollow fiber membrane. A distance between microfibril bundles greater than 0.6 μm also tends to cause insufficient mechanical strength.

In the dense layer, a mean microfibril length is preferably in a range from 0.2 to 5 μm, and the distance between microfibril bundles is preferably in a range from 0.02 to 0.3 μm. A microfibril length less than 0.2 μm or a distance between microfibril bundles less than 0.02 μm leads to larger resistance to filtration in the dense layer that results in an insufficient flow rate of permeation through the entire composite hollow fiber membrane. A microfibril length greater than 5 μm tends to cause insufficient mechanical strength of the dense layer, and a distance between microfibril bundles greater than 0.3 μm tends to cause the separation accuracy of the composite hollow fiber membrane to decrease.

To increase the flow rate of permeation through the composite hollow fiber membrane, it is effective to increase the microfibril length of the support layer and decrease the thickness of the dense layer.

The microfibril length and distance between microfibril (bundles) in the present invention can be measured, for example, as follows.

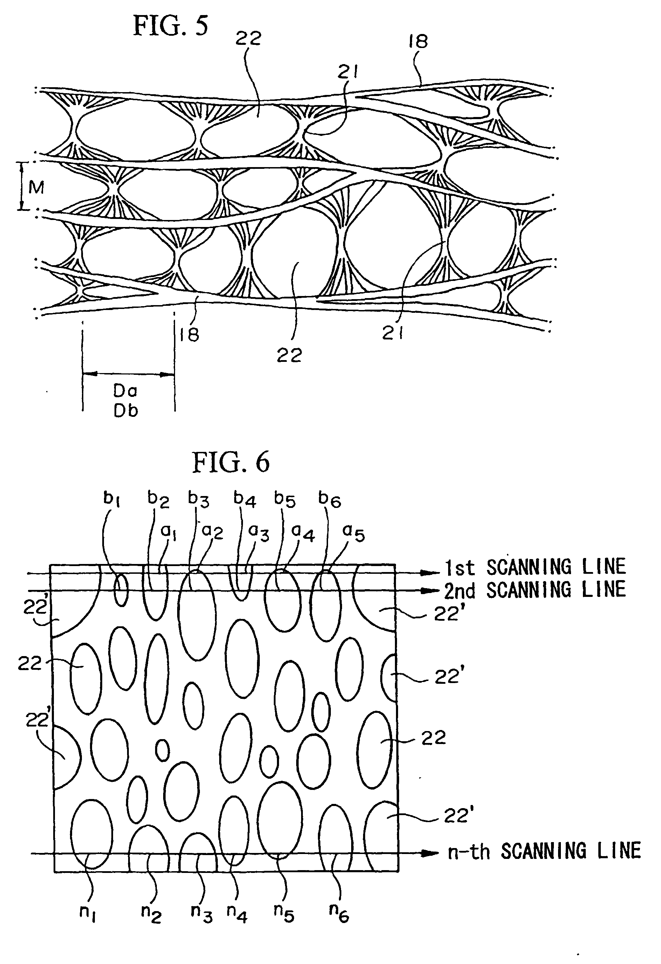

The porous membrane to be measured is cut along the direction of stretching into extremely thin sections that are used as samples. An image of the sample at 6500X magnification is taken with a transmission electron microscope and is fed to an image processor. Then as shown in Fig. 6, n scan lines are drawn over the image at a constant pitch (for example, 0.052 μm). For each scan line, the length of a section thereof lying over a micropore 22 for example a1, a2, a3, .. . is measured and the sum is calculated (total length) . Similarly, for each scan line, for example sum b1, b2, b3. . . is calculated. At this time, scan lines for which the length (the microfibril length or distance between microfibril (bundles)) of a section thereof lying over the micropore 22 cannot be measured, for example micropore 22', may be omitted. On the other hand, the number of micropores 22, 22... crossed by the scan lines is counted (total number). In Fig. 6, for example, the first scan line crosses five micropores, the second scan line crosses six micropores and nth scan line crosses six micropores. Then the total length is divided by the total number (total length/the total number). In this measurement, when the scan lines run at right angles to the direction of stretching, the distance between microfibril (bundles) can be determined and, when the scan lines run in parallel to the direction of stretching, the microfibril length can be determined.

For the intermediate layer, instead of forming the single dense layer, for example, two dense layers 16 may also be formed between the outermost layer 12 and the innermost layer 14 as shown in Fig. 3, or a dense layer 16 and a layer 17 having intermediate characteristics, between those of the support layer and the dense layer, may also be formed between the outermost layer 12 and the innermost layer 14 as shown in Fig. 4. Structures comprising four or more layers of various combinations may be employed as long as a layer that is denser than the outermost layer 12 is not formed outside the outermost layer 12.

The composite hollow fiber membrane of the present invention has a constitution of three or more layers, with the dense layer that has the highest effect on filtration being disposed as the intermediate layer. While the composite hollow fiber membrane of the prior art of two-layer constitution having the dense layer disposed as the outermost layer is likely to be clogged, the composite hollow fiber membrane of the present invention is less likely to be clogged since the dense layer is not disposed as the outermost layer. Also in the case of the composite hollow fiber membrane of the prior art of two-layer constitution having the dense layer disposed as the innermost layer, it is difficult to control the degree of crystal orientation within a specified range and the sizes of the micropores formed in the dense layer become non-uniform (the pore diameters are widely scattered), resulting in lower separation accuracy. According to the present invention, on the contrary, since the dense layer is disposed as the intermediate layer outside of the innermost layer, the dense layer is cooled down faster during spinning, resulting in an improved order of crystal orientation and a stable degree of crystal orientation. As a result, micropores of uniform pore diameters are formed (a concentrated distribution of pore diameters) and the separation accuracy is improved.

Since the degree of order in crystal orientation is improved and it is easier to control for both the support layer and the dense layer because of the constitution comprising three or more layers, it is made possible to control the micropores and improve the filtration life and separation accuracy at the same time.

The inner diameter of the composite hollow fiber membrane is preferably in a range from 50 to 5000 μm. An inner diameter less than 50 μm increases the pressure loss in the hollow fiber membrane and is not desirable for practical use. Inner diameter larger than 5000 μm leads to a low concentration of the hollow fiber membrane, resulting in significantly lower water permeability amount per unit volume.

The total thickness of the membrane is preferably in a range from 5 to 500 μm and more preferably in a range from 30 to 200 μm. A total thickness less than 5 μm leads to weak mechanical strength, eventually resulting in flattening deformation of the hollow fibers. When thicker than 200 μm, a high water permeability amount cannot be achieved.

For the composite hollow fiber membrane of the present invention, it is strongly preferable to have porosity of 75% by volume or higher.

The filtration life can be extended by making the porosity 75% by volume or higher.

The filtration life can be further extended by increasing the initial flow rate (water permeability amount) through the membrane, preferably setting the initial water permeability amount to 25.0 L/(m$^2$ · hr · kpa) or higher. The initial flow rate (water permeability amount) through the composite hollow fiber membrane of the present invention can be increased by increasing the length of the microfibrils of the micropores in the support layer and decreasing the thickness of the dense layer.

The composite hollow fiber membrane of the present invention is produced, for example, by the following procedure.

Molten crystalline polymer is co-extruded through a hollow fiber extrusion die having three or more annular nozzles disposed in a concentric configuration, with the extruded fiber being cooled and taken up, thereby spinning the composite non-stretched hollow fiber (non-stretched fiber) comprising the innermost layer, the outermost layer and the intermediate layer that includes the dense layer being stacked one on another.

Such spinning conditions are preferably set so that the degree of crystal orientation fc of the non-stretched fiber made of the polymer for the support layer is in a range from 0.8 to 0.99 and the degree of crystal orientation fc of the non-stretched fiber made of the polymer for the dense layer is in a range from 0.2 to 0.75, when the polymer for the support layer (outermost layer and innermost layer) and the polymer for the dense layer (intermediate layer) are extruded individually and cooled. The higher the degree of crystal orientation fc, namely nearer to 1.0, the higher the degree of crystal orientation with which the lamellar crystal aggregate is oriented in the longitudinal direction of the fiber, thus increasing the statistical size of the lamellar aggregate in the longitudinal direction of the fiber and making it possible to increase the length of microfibrils in the longitudinal direction of the fiber during stretching.

Consequently, by stretching the composite non-stretched hollow fiber having such a degree of crystal orientation as described above, a composite hollow fiber membrane comprising a support layer that has relatively large micropores and a dense layer that has smaller micropores can be made, providing both high water permeability and high separation characteristics.

Now the degree of crystal orientation will be described below.

The degree of crystal orientation that represents the degree of orientation of the crystallographic axis with respect to the longitudinal direction of the fiber is defined as follows, with $\alpha$, $\beta$ and $\gamma$ representing the angles between the longitudinal direction of the non-stretched fiber and the three axes a, b and c of the crystal, respectively.

$$fa = [3(\cos^2\alpha)-1] / 2 \tag{1}$$

$$fb = [3(\cos^2\beta)-1] / 2 \tag{2}$$

$$fc = (3(\cos^2\tau)-1) / 2 \tag{3}$$

where the value of $(\cos^2\alpha)$ is given by the following formula.

$$\langle \cos^2 \alpha \rangle = \frac{\int_0^{\pi/2} I(\psi_{h00}) \sin^2 \psi_{h00} \cos \psi_{h00} \cos^2 \theta_{h00} \psi_{h00} d\psi_{h00}}{\int_0^{\pi/2} I(\psi_{h00}) \cos \psi_{h00} d\psi_{h00}}$$

Where $I(\Psi_{h00})$ represents the distribution of strength along the Debye ring of diffraction in the (h00) plane, and $\theta_{h00}$ is the Bragg angle of diffraction in the (h00) plane. $\Psi_{h00}$ is an azimuth along the Debye ring of diffraction in the (h00) plane.

The following equation (4) is satisfied when the three axes of the microcrystal are perpendicular to each other.

$$fa + fb + fc = 1 \tag{4}$$

In the case of non-stretched polyethylene fiber, since the c axis is oriented in the longitudinal direction of the fiber, fa and fb are calculated from the intensity distribution in the direction of the azimuth determined for the reflection on (200) ($2\theta = 24.0°$ ) and reflection on (020) ($2\theta = 36.3°$ ), and fc is determined from equation (4).

The composite non-stretched hollow fibers that have been made as described above are stretched and processed to form the pores, thereby making the porous membrane. Stretching is preferably carried out in a two-stage stretching process comprising cold stretching at room temperature and hot stretching while heating, or a multistage stretching process wherein the hot stretching is carried out in a plurality of steps.

While cold stretching and hot stretching may be carried out by a known method of forming pores, the overall stretching ratio(cold stretching ratio × hot stretching ratio) is preferably set to 5 or greater, and more preferably in a range from 5.5 to 15. An overall porosity of the entire membrane not less than 75% by volume can be achieved and the initial water permeability and accumulated water permeability can be increased by setting the stretching ratio to 5 or more. A stretching ratio exceeding 15 results in unpractical elongation of the hollow fiber membrane.

The deforming speed of hot stretching is preferably in a range from 0.01 to 10 min[-1],although the optimum conditions vary depending on the type of polymer used. A deforming speed lower than 0.01 min[-1] makes the non-stretched fiber likely to break, while a deforming speed higher than 10 min[-1] makes it difficult to achieve the porosity described above.

It is also preferable to relax the stress by carrying out thermosetting of the membrane under constant length or slightly loosened condition, in order to relax the stress of the stretched fiber and achieve dimensional stability, if necessary. In order to carry out the thermosetting effectively, the thermosetting temperature is set higher than the stretching temperature to such an extent that does not exceed the melting temperature.

The composite hollow fiber membrane comprising three or more layers can be obtained as described above.

According to the present invention, when a molten polymer for the support layer and a molten polymer for the dense layer are extruded through a die and, in the process of being cooled with the stress being applied thereto during stretching, a decrease in the molecular mobility (increase in viscosity) of the molten polymer molecular chain and crystal growth of folded molecular chains (growth of lamellar crystals) compete with each other. The degree of crystal orientation (the order of orientation of the lamellar crystal) in the composite non-stretched hollow fiber is believed to be determined when the competition of these two trends reaches equilibrium as the fibers are cooled down.

In the present invention, the isothermal crystallization time $\tau$ refers to one half of the period of crystallization of molecular chains into a spherical crystal under a constant temperature to an end point when the adjacent grains of spherical crystals push each other so that the crystal growth is stopped.

The composite non-stretched hollow fiber of the present invention has a crystal structure with lamellar crystals stacked in the longitudinal direction of the fiber, and not spherical crystals formed at the time of isothermal crystallization, although the crystallization time $\tau$ can be used as an index for quantifying the crystal growing rate of the folded molecular chains. The higher the degree of orientation of the lamellar crystals in the composite non-stretched hollow fiber, the larger the lamellar crystal aggregate having an ordered structure. The present invention has been made on the basis of the finding that the size of the lamellar crystal corresponds to the length of the microfibrils after stretching. The length of the microfibrils of the support layer of the stretched hollow fiber can be made longer than the length of the microfibrils of the dense layer, by satisfying the conditions for the size of the lamellar crystal.

The degree of orientation and the size of the lamellar crystals tends to increase with a polymer of shorter isothermal crystallization time $\tau$ in the process of crystal growth under the stress of stretching, probably reflecting the ease of thermal motion of the molecular chains, although the detailed mechanism is not yet known.

Consequently, the size of the lamellar crystals in the dense layer can be made smaller than the size of the lamellar crystals in the support layer by selecting the type of polymer for each layer so that the crystallization time $\tau$ p of the polymer of the dense layer is longer than the crystallization time $\tau$ s of the polymer of the support layer ($\tau$ p/$\tau$ s > 1). Thus the length of the microfibrils of the dense layer becomes shorter than that of the support layer and, as a result, the micropores of the dense layer become smaller than those of the support layer. Thus both the water permeability and the separation accuracy can be improved.

When a polymer that crystallizes at a rate as high as $\tau$ p/$\tau$ s > 100 is used for the support layer, the order of orientation in the direction of thickness is disturbed even when the thickness of the support layer is set as described above, resulting in a non-uniform distribution of micropore sizes after stretching, and therefore such a polymer is not desirable.

The composite hollow fiber membrane described above can be used without further treatment as an air filter or a mist filter. For use in water filtration, the composite hollow fiber membrane is desirably coated with a hydrophilic polymer on the surface of the micropores to make the surface easily wettable by water.

Specifically, coating layers of a hydrophilic polymer are formed on the knotted portion of the stacked lamella and the surface of microfibril of the composite hollow fiber membrane.

The hydrophilic polymer is preferably a copolymer containing 20% by mole or more of ethylene and 10% by mole or more of a hydrophilic monomer. These polymers may be any type of copolymer such as random copolymers, block copolymers and graft copolymers. When the ethylene content in the copolymer is less than 20% by mole, the copolymer exhibits a weak affinity for the composite hollow fiber membrane, thereby making it difficult to satisfactorily form a coating layer made of the hydrophilic copolymer, which is not preferable.

Examples of the hydrophilic monomer used for the hydrophilic copolymer by polymerization include vinyl compounds such as vinyl alcohol, (meth)acrylic acid and salts thereof, hydroxyethyl (meth)acrylate, polyethylene glycol (meth)acrylate, vinyl pyrrolidone, and acrylamide. One or more of these hydrophilic monomers is preferably included and a particularly preferable monomer is vinyl alcohol.

As the hydrophilic polymer, for example, ethylene-vinyl alcohol copolymer, polyvinyl alcohol, polyvinyl pyrrolidone, and hydrolysate of polyvinyl acetate can be used.

The hyrophilic copolymer may contain one or more third components other than ethylene or hydrophilic monomer and the third component includes, for example, vinyl acetate, (meth)acrylate, vinyl alcohol fatty ester and formylated or butyrated compounds of vinyl alcohol.

The solvent of the hydrophilic copolymer is preferably a water-miscible organic solvent and specific examples thereof include water, alcohols such as methanol, ethanol, n-propanol, isopropyl alcohol, butanol, and ethylene glycol; dimethyl sulfoxide and dimethylformamide. These solvents can also be used alone, but a mixture with water is more preferable because of strong solubility for the hydrophilic copolymer.

In view of ease of forming an atmosphere containing a vapor of the solvent used to dry the hollow fiber membrane coated with the hydrophilic copolymer, i.e. low vapor pressure and low toxicity to the human body of the solvent, a mixed solvent of alcohols having a boiling point of less than 100°C, for example, methanol, ethanol and isopropyl alcohol with water is particularly preferable.

The mixing ratio of the water-miscible organic solvent to water may be within any range as far as it does not impair the permeability to the composite hollow fiber membrane and does not lower dissolution of the copolymer, and varies depending on the kinds of the copolymers used. When using ethanol as the organic solvent, the mixing ratio of ethanol to water is preferably in a range from 90/10 to 30/70 (% by volume).

The concentration of the hydrophilic copolymer solution is in a range from about 0.1 to 10% by weight, and preferably from 0.5 to 5% by weight. Using a solution having a concentration of less than 0.1% by weight to makes it difficult uniformly coat the hydrophilic copolymer in the hydrophulization treatment. On the other hand, when the concentration exceeds 10% by weight, the viscosity of the solution becomes too large. When the hydrophilization treatment is conducted by using the resulting solution, clogging of the micropores of the composite hollow fiber membrane by the copolymer occurs.

As the coating method, there can be applied a conventionally known method of immersing a composite hollow fiber membrane in a hydrophilic polymer solution, pulling up the composite hollow fiber membrane and vaporizing the solvent by heating. In that case, the composite hollow fiber membrane may be immersed twice or more in a copolymer solution having the same concentration and may also be immersed twice or more in a copolymer solutions having the different concentrations.

As the temperature of the hydrophilic copolymer solution used in the immersion treatment becomes higher, the viscosity is lowered to improve permeation of the solution into the composite hollow fiber membrane, which is preferable. In view of safety, the temperature is preferably lower than the boiling point of the solution.

The immersion time varies depending on the film thickness, micropore size and porosity of the composite hollow fiber membrane, but is preferably in a range from several seconds to several minutes.

The amount of the hydrophilic copolymer to be coated is preferably in a range from 3 to 30% by weight based on the weight of the composite hollow fiber membrane before being subjected to the hydrophilization treatment. When the amount of the coated hydrophilic copolymer is less than 3% by weight, the affinity for water is poor, thereby lowering the water permeation properties. On the other hand, when the amount of the coated hydrophilic copolymer exceeds 30% by weight, clogging of the micropores with the copolymer is liable to occur, thereby if anything, lowering the water permeation properties.

A composite hollow fiber membrane suited for filtration of water can be obtained by subjecting it to hydrophilization treatment. Those subjected to the hydrophilization treatment permanently exhibit hydrophilicity.

When subjected to the hydrophilization treatment, as shown in Fig. 5, several microfibrils are bundled to form a microfibril bundle 21 and the micropores 22 are in the form of ellipses by changing from slits.

In the composite hollow fiber membrane subjected to the hydrophilization treatment, with regard to the size of micropores in the dense layer, the mean distance Da between microfibril bundles is preferably in a range from 0.02 to 0.6 μm, and more preferably from 0.2 to 0.4 μm. When the mean distance Da between microfibril bundles exceeds 0.6 μm, the separation accuracy is liable to be lowered. On the other hand, when Da is smaller than 0.02 μm, the overall flow rate of permeation of the composite hollow fiber membrane is liable to be reduced in practice, which is not preferable.

Similarly, with regard to the size of micropores in the support layer, the mean distance Db between microfibril bundles is preferably in a range from 0.1 to 1 μm, and more preferably from 0.4 to 0.5 μm. In the case of a hollow fiber membrane having a support layer containing micropores of 0.1 μm or less in Db, the water permeation rate is liable to be lowered. On the other hand, when Db exceeds 1 μm, the mechanical strength of the hollow fiber membrane is liable to be lowered.

The length M of the microfibrils in the support layer is preferably in a range from 0.4 to 10 μm, and more preferably from 0.7 to 5.0 μm. In case of a hollow fiber membrane having a support layer containing micropores with a length of the microfibrils of less than 0.4μm, the water permeation rate is liable to be lowered. On the other hand, when the length M of microfibrils exceeds 10 μm, the mechanical strength of the hollow fiber membrane is liable to be lowered.

In case of the composite hollow fiber membrane of the present invention, the blocking rate (i.e. separation accuracy) with regard to polystyrene standard particles having a particle diameter ranging from 0.05 to 0.3 μm can be adjusted to 90% or more.

In case of the composite hollow fiber membrane of the present invention, the initial water permeation amount can be adjusted to 25.0 L/(m$^2$ · hr · KPa) if the differential pressure of both surfaces of the membrane is 98 KPa when used for filtration of tapped water. The accumulated flow amount of water permeated through the membrane until the water permeation rate is reduced to 50% of the initial value can be adjusted to 35.0 L/(m$^2$ · kpa) or more, whereby clogging dose not readily occur with continuous water permeation and sufficient filtration life of the filter is attained.

Examples

[Examples 1 to 4]

A high-density polyethylene having a melt flow index of 1.3 g/10 minutes and a density of 0.966 g/cm$^3$ (manufactured by Asahi Chemical Co., Ltd. under the trade name of "SUNTEC B161") was used as a polymer for the support layer, while a high-density polyethylene having a melt flow index of 0.90 g/10 minutes and a density of 0.960 g/cm$^3$

(manufactured by Tohso Corporation under the trade name of "NIPORON HARD 5110") was used as a polymer for the dense layer.

These high-density polyethylenes were melted on a hot stage attached to a polarization microscope at 150°C and rapidly cooled to 125°C at a rate of 50°C/minute, and then an isothermal crystallization process was observed at 125°C. Using a polarizer and an analyzeras a cross-Nicol, the process was continued until the brightness becomes constant and a record was kept while measuring the brightness in the field of view using a photometer. The time of the growth process excluding the crystallization induction period was determined from the resulting record and then the crystallization time $\tau$ was determined.

In case of the polymer "SUNTEC B161" used in the support layer, $\tau$ was 100 second. In case of the polymer "NIPORON HARD 5110" used in the dense layer, $\tau$ was 200 second.

The molten polymer for the support layer was fed to a discharge port for the innermost layer and that for outermost layer of a nozzle for producing hollow fiber, which has three annular discharging ports disposed in a concentric configuration, while the molten polymer for constituting the dense layer was fed to a discharge port located in between. The molten polymers were extruded through each port while maintaining the temperature of the polymer at 170°C, cooled and then reeled up at a draft ratio of 650 to obtain a composite non-stretched hollow fiber. To improve the order in the crystal orientation, the composite non-stretched hollow fiber was annealed by allowing it to stand at 115°C for 12 hours.

On decision of the spinning conditions, the polymer for support layer and polymer for dense layer are previously spun, separately, at the same spinning temperature, cooling conditions and draft ratio, and then it was confirmed that the resulting non-stretched hollow fiber has a predetermined degree of order in the crystal orientation as shown in Table 3 by measuring the degree of order in the crystal orientation of the non-stretched hollow fiber by using an X-ray diffraction apparatus, Model RU200, manufactured by Rigaku Denki Co., Ltd.

After annealing, the composite non-stretched hollow fiber was cold-stretched at room temperature and then hot-stretched at 110°C to obtain a three-layer structure composite hollow fiber membrane.

The resulting composite hollow fiber membrane was immersed in a solution (concentration of solute: 0.8% by weight) prepared by dissolving an ethylene-vinyl alcohol copolymer (manufactured by Nippon Synthesis Chemicals Co., Ltd. under the trade name of "SOANOL DC32") in a mixed solvent of alcohol and water, and then the solvent was evaporated by drying at 65°C while lifting the hollow fiber membrane to obtain a hydrophilized composite hollow fiber membrane.

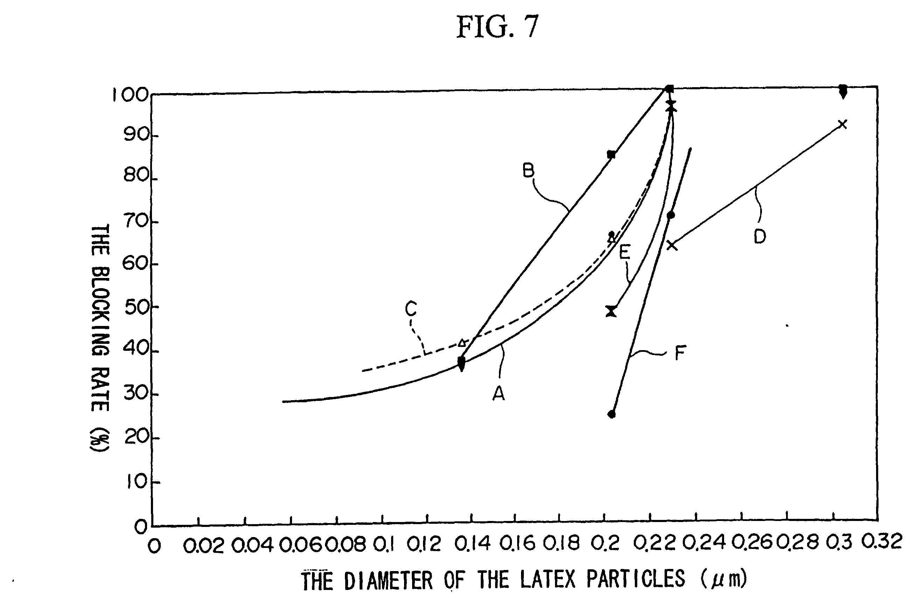

With regard to this composite hollow fiber membrane, the porosity, initial air flux and initial water permeation amount were measured. With regard to Examples 1 to 3, the fraction accuracy was measured. The results are shown in Fig. 7 wherein the line A denotes Example 1, the line B denotes Example 2, and the line C denotes Example 3. After the micropores of the hollow fiber membrane were packed with a resin, a cross-sectional sample was made by cutting the membrane along the fiber axis and was observed by a scanning electron microscope. Then, the thickness of the support layer, the thickness of the dense layer, the mean micropore size (length of the microfibrils and the distance between microfibrils) of the respective layers were measured. Furthermore, a continuous water permeation test was conducted as an index of the degree of clogging.

[Example 5]

An isotactic polypropylene having a density of 0.91 g/cm$^3$, an MI of 3.0 and an isotacticity of 98% (manufactured by Mitsui Chemicals Co., Ltd. under the trade name of "Hipol CJ700") was used as a polymer for the support layer, while a homopolymer having a density of 0.905 g/cm$^3$, an MI of 1.6 and an isotacticity of 97% (manufactured by FINA Co. under the trade name of "FINA3230B HOMOPOLYMER") was used as a polymer for the dense layer.

The molten polymer for the support layer was fed to a discharge port for the innermost layer and that for the outermost layer of a nozzle for producing hollow fiber, which has three annular discharging ports disposed in a concentric configuration, while the molten polymer for constituting the dense layer was fed to a discharge port located in between. The molten polymers were extruded through each port while maintaining the temperature of the polymer at 190°C, cooled and then reeled up at a draft ratio of 200 to obtain a composite non-stretched hollow fiber.

To improve degree of order in crystal orientation, the composite non-stretched hollow fiber was annealed by allowing to stand at 135°C for 12 hours.

After annealing, the composite non-stretched hollow fiber was cold-stretched at room temperature at a stretching ratio of 1.6 and then hot-stretched at 130°C to obtain a three-layer structure composite hollow fiber membrane.

The resulting composite hollow fiber membrane was immersed in a solution (concentration of solute: 0.8% by weight) prepared by dissolving an ethylene-vinyl alcohol copolymer (manufactured by Nippon Synthesis Chemicals Co., Ltd. under the trade name of "SOANOL DC32") in a mixed solvent of alcohol and water, and then the solvent was evaporated by drying at 65°C while lifting the hollow fiber membrane to obtain a hydrophilized composite hollow fiber membrane.

With regard to this membrane, the porosity, initial air flux and initial water permeation amount were measured. After the micropores of the hollow fiber membrane were packed with a resin, a cross-sectional sample was made by cutting the membrane along the fiber axis and was observed by a scanning electron microscope. Then, the thickness of the support layer, the thickness of the dense layer, the mean micropore size (the length of the microfibrils and the distance between microfibrils) of the respective layers were measured. Furthermore, a continuous water permeation test was conducted.

The results of the evaluation of the hollow fiber membrane are summarized in Tables 1 to 3.

[Comparative Example 1]

Using the same high-density polyethylenes as those used in Examples 1 to 4, the molten polymer for the support layer (SUNTEC B161) was fed to a discharge port for the outer layer of a nozzle for producing hollow fiber, which has two annular discharging ports disposed in a concentric configuration, while the molten polymer for constituting the dense layer (NIPORON HARD 5110) was fed to a discharge port for inner layer. The molten polymers were extruded through each port while maintaining the temperature of the polymer at 170°C, cooled and then reeled up at a draft ratio of 650 to obtain a composite non-stretched hollow fiber. To improve the degree of order in the crystal orientation, the composite non-stretched hollow fiber was annealed by allowing it to stand at 115°C for 12 hours.

After annealing, the composite non-stretched hollow fiber was cold-stretched at room temperature and then hot-stretched at 110°C to obtain a two-layer structure composite hollow fiber membrane.

The resulting composite hollow fiber membrane was immersed in a solution (concentration of solute: 0.8% by weight) prepared by dissolving an ethylene-vinyl alcohol copolymer (manufactured by Nippon Synthesis Chemicals Co., Ltd. under the trade name of "SOANOL DC32") in a mixed solvent of alcohol and water, and then the solvent was evaporated by drying at 65°C while lifting the hollow fiber membrane to obtain a hydrophilized composite hollow fiber membrane.

With regard to this membrane, the porosity, initial air flux and initial water permeation amount were measured. The fraction accuracy was measured and the results are shown in Fig. 7 by the line D. Furthermore, a cross-sectional sample was observed by a scanning electron microscope and the thickness of the support layer, thickness of the dense layer, mean micropore size (the length of the microfibrils and the distance between microfibrils) of the respective layers were measured. Furthermore, a continuous water permeation test was conducted.

The degree of crystal orientation fc of each layer cannot be directly determined in the state of the composite non-stretched fiber. However, it has been found that the dense layer of this composite hollow fiber membrane substantially corresponds to a draft ratio of 150 when enabling the results of micropores after spinning the polymer alone of each layer to form an non-stretched fiber (draft ratio of 100 to 700), and cold and hot-stretching the fiber to correspond to the results of the observation of micropores of the composite hollow fiber membrane. Therefore, the degree of crystal orientation fc of the dense layer at this draft ratio is assumed from the degree of crystal orientation fc of the single spun product and is shown in Table 3.

[Comparative Example 2]

Using the same high-density polyethylenes as those used in Examples 1 to 4, the molten polymer for the support layer (SUNTEC B161) was fed to a discharge port for the inner layer of a nozzle for producing hollow fiber, which has two annular discharging ports disposed in a concentric configuration, while the molten polymer for constituting the dense layer (NIPORON HARD 5110) was fed to a discharge port for the outer layer. The molten polymers were extruded through each port while maintaining the temperature of the polymer at 170°C, cooled and then reeled up at a draft ratio of 650 to obtain a composite non-stretched hollow fiber.

To improve the crystal orientation order, the composite non-stretched hollow fiber was annealed by allowing it to stand at 115°C for 12 hours.

After annealing, the composite non-stretched hollow fiber was cold-stretched at room temperature and then hot-stretched at 110°C to obtain a two-layer structure composite hollow fiber membrane.

The resulting composite hollow fiber membrane was immersed in a solution (concentration of solute: 0.8% by weight) prepared by dissolving an ethylene-vinyl alcohol copolymer (manufactured by Nippon Synthesis Chemicals Co., Ltd. under the trade name of "SOANOL DC32") in a mixed solvent of alcohol and water, and then the solvent was evaporated by drying at 65°C while lifting the hollow fiber membrane to obtain a hydrophilized composite hollow fiber membrane.

With regard to this membrane, the porosity, initial air flux and initial water permeation amount were measured. Furthermore, a cross-sectional sample was observed by a scanning electron microscope and the thickness of the support layer, thickness of the dense layer, mean micropore size (the length of the microfibrils and the distance between microfibrils) of the respective layers were measured. A Continuous water permeation test was conducted and the accumulated water permeation amount was measured. The evaluation results of the hollow fiber membrane are summarized in Tables 1 to 3.

[Comparative Examples 3 and 4]

Using a high-density polyethylene having an MI of 5.5 g/10 minutes (manufactured by Mitsui Oil & Chemical Co., Ltd. under the trade name of "HIZEX 2200J"), an non-stretched hollow fiber of a single-layer membrane was made under the conditions of a spinning temperature of 157°C and a draft ratio of 2500.

This hollow fiber was annealed by allowing it to stand at 111°C for 16 hours.

After annealing, the non-stretched hollow fiber was cold-stretched at room temperature and then hot-stretched at 110 °C to obtain a single-layer structure hollow fiber membrane.

The hot-stretching speed was set to 2.6/minute in Comparative Example 3, and was set to 2.2/minute in Comparative Example 4.

Each hollow fiber membrane was immersed in a solution (concentration of solute: 0.8% by weight) prepared by dissolving an ethylene-vinyl alcohol copolymer (manufactured by Nippon Synthesis Chemicals Co., Ltd. under the trade name of "SOANOL DC32") in a mixed solvent of alcohol and water, and then the solvent was evaporated by drying at 65°C while lifting the hollow fiber membrane to obtain a hydrophilized hollow fiber membrane.

With regard to this membrane, the porosity, initial air flux and initial water permeation amount were measured. The fraction accuracy was measured and the results are shown in Fig. 7 wherein the line E denotes Comparative Example 3 and the line F denotes Comparative Example 4, respectively. Furthermore, a cross-sectional sample was observed by a scanning electron microscope and the thickness of the layer and mean micropore size (the length of the microfibrils and the distance between microfibrils) of the respective layers were measured. Furthermore, a continuous water permeation test was conducted.

Furthermore, the measuring methods for the respective evaluations are as follows.

[Porosity]

The membrane weight was measured in the state where micropores of the hollow fiber membrane are impregnated with butanol, and the membrane weight was measured after removing butanol by using a centrifugal separator. Then, the overall porosity of the hollow fiber membrane was determined from the volume of hollow fibers when the porosity is 0 and the volume of butanol with which the micropores are impregnated.

[Air flux]

100 hollow fiber membranes having an effective length of 5 cm were bundled by using a potting resin and, after passing air through the resulting membrane bundle from outside the membrane while applying a pressure of 98 KPa, the amount of air permeated through the interior of the membrane was measured by using a float type flowmeter.

[Water permeation]

100 hollow fiber membranes having an effective length of 5 cm were bundled by using a potting resin and, after passing water through the resulting membrane bundle from outside the membrane at a pressure of 98 KPa, the amount of water permeated through the interior of the membrane was measured.

[Continuous water permeation test]

Hollow fiber membranes having an effective length of 10 cm were bundled by using a potting resin to form a membrane bundle having a surface area of 80 cm$^2$ and, after passing tap water of Nagoya-shi, Aichi-ken, JAPAN through the resulting membrane bundle from outside the membrane at a pressure of 98 KPa, the change in the amount of water penetrating through the interior of the membrane over time was measured and then the accumulated amount of water permeated through the membrane until the water permeation amount is reduced to 50% of the initial value was determined.

[Size of micropores]

After the micropores of the hollow fiber membrane were packed with a polymethacrylic resin, a cross-sectional sample was made by cutting the membrane along the fiber axis of the hollow fiber membrane and was observed by a scanning electron microscope. Then, the length of the microfibrils and the distance between microfibrils were measured and the average numerical values thereof were determined.

[Fraction accuracy]

Using commercially available polystyrene standard particles manufactured by Dow Co., solutions were prepared by dispersing particles having different particle diameters in ion-exchange water. After passing each of these solutions through the membrane, the absorbance of light having a wavelength of 320 nm to the solution permeated through the membrane was measured by using a spectrophotometer. The proportion of each of the polystyrene standard particles blocked by the membrane (blocking rate) was determined from this absorbance and the absorbance of ion-exchange water.

Table 1

| | Spinning conditions | Stretching conditions | | | |
|---|---|---|---|---|---|
| | Ratio of amount of molten polymer discharged (1) | Total stretching ratio | Cold stretching ratio | Hot stretching ratio | Hot stretching speed (min$^{-1}$) |
| Example 1 | 2.8/1.0/2.8 | 7.0 | 1.6 | 4.4 | 1.2 |
| Example 2 | 3.2/1.0/3.2 | 7.0 | 1.6 | 4.4 | 1.4 |
| Example 3 | 6.6/1.0/1.3 | 7.0 | 1.6 | 4.4 | 1.4 |
| Example 4 | 5.0/1.0/5.0 | 6.6 | 1.6 | 4.1 | 1.3 |
| Example 5 | 5.0/1.0/5.0 | 7.0 | 1.6 | 4.4 | 1.3 |
| Comp. Example 1 | -/7.7/1.0 | 7.0 | 1.6 | 4.4 | 1.1 |
| Comp. Example 2 | 4.0/1.0/- | 6.0 | 1.25 | 4.8 | 0.65 |
| Comp. Example 3 | - | 6.2 | 1.9 | 3.3 | 2.6 |
| Comp. Example 4 | - | 6.2 | 1.9 | 3.3 | 2.2 |

(1) Each numerical value indicates a ratio of molten polymer discharged of inner support layer/ dense layer / outer support layer in this order.

Table 2

| | Composite hollow fiber membrane after being subjected to hydrophilization treatment | | | | | | | | |
|---|---|---|---|---|---|---|---|---|---|
| | Porosity | Inner diameter | Outer diameter | Thickness of inner support layer | Thickness of dense layer | Thickness of outer support layer | Air flux | Water permeation amount | Accumulated amount of water permeated through continuous water permeation test |
| | Vol% | $\mu$m | $\mu$m | $\mu$m | $\mu$m | $\mu$m | $\times\ 10^3$L/(m$^2$ hr KPa) | L/(m$^2$ hr KPa) | L/(m$^2$ KPa) |
| Example 1 | 77.8 | 229 | 382 | 32.7 | 11.7 | 32.7 | 15.2 | 36.1 | 65.0 |
| Example 2 | 77.6 | 284 | 469 | 40.0 | 12.6 | 40.0 | 13.7 | 35.5 | 66.8 |
| Example 3 | 78.0 | 239 | 360 | 45.0 | 6.8 | 8.6 | 12.2 | 36.7 | 80.5 |
| Example 4 | 77.2 | 256 | 390 | 30.9 | 5.0 | 30.9 | 15.2 | 38.6 | 90.2 |
| Example 5 | 78.2 | 252 | 388 | 31.5 | 5.0 | 31.5 | 15.1 | 35.5 | 90.6 |
| Comp. Example 1 | 73.0 | 250 | 384 | - | 7.7 | 59.3 | 14.9 | 33.4 | 60.2 |
| Comp. Example 2 | 73.5 | 293 | 437 | 60.0 | 12.2 | - | 9.5 | 32.1 | 22.5 |
| Comp. Example 3 | 72.0 | 270 | 380 | Single-layer membrane having a film thickness of 55 $\mu$m | | | 7.6 | 18.9 | 28.0 |
| Comp. Example 4 | 72.0 | 270 | 380 | Single-layer membrane having a film thickness of 55 $\mu$m | | | 8.8 | 21.7 | 32.0 |

Table 3

| | Mean particle diameter after being subjected to hydrophilization treatment | | | Mean distance between fibrils of micropores (μm) | | | X-ray structural analysis results of non-stretched hollow fibers | |
|---|---|---|---|---|---|---|---|---|
| | Mean length of fibrils of micropores (μm) | | | | | | | |
| | Inner support layer | Dense layer | Outer support layer | Inner support layer | Dense layer | Outer support layer | Degree of crystal orientation fc in non-stretched hollow fibers in case of support layer alone | Degree of crystal orientation fc in non-stretched hollow fibers in case of dense layer alone |
| Example 1 | 5.2 | 2.8 | 5.1 | 0.20 | 0.15 | 0.30 | 0.93* | 0.71* |
| Example 2 | 3.9 | 2.1 | 3.7 | 0.15 | 0.15 | 0.22 | 0.93* | 0.71* |
| Example 3 | 3.6 | 1.9 | 3.5 | 0.30 | 0.14 | 0.30 | 0.93* | 0.71* |
| Example 4 | 4.1 | 1.9 | 4.0 | 0.20 | 0.12 | 0.29 | 0.93* | 0.71* |
| Example 5 | 3.7 | 1.8 | 3.8 | 0.20 | 0.12 | 0.28 | 0.89 | 0.63 |
| Comp. Example 1 | - | 1.8 | 4.2 | - | 0.31 | 0.30 | 0.92 | 0.15 |
| Comp. Example 2 | 3.2 | 1.4 | - | 0.33 | 0.14 | - | 0.93- | 0.65 |
| Comp. Example 3 | single-layer membrane having a mean length of 1.4 | | | single-layer membrane having a mean distance of 0.13 | | | - | - |
| Comp. Example 4 | single-layer membrane having a mean length of 1.5 | | | single-layer membrane having a mean distance of 0.14 | | | - | - |

*: In Examples 1 to 4, the spinning temperature and draft ratio of the composite non-stretched hollow fibers are the same and the results of crystal structural analysis are also the same.

As is apparent from the results described above, the composite hollow fiber membranes of these Examples are superior in air flux and water permeation and are less likely to suffer clogging. As is apparent from Fig. 7, the composite hollow fiber membranes have high filtration performance to small particles. It is also apparent from large incline, the composite hollow fiber membranes have a narrow pore size distribution and high separation accuracy. Particularly, particles having a particle diameter of 0.230 μm or more can be completely separated.

Industrial Applicability

The hollow fiber membrane of the present invention has a high separation accuracy and, when used in the filtration of water, achieves sufficient bacteria separation characteristics. A high flow rate of permeation can also be achieved at the same time. The hollow fiber membrane also allows sufficient accumulated flow amount of permeation to be practical and is less likely to be clogged, thus making it possible to extend the filtration life of the membrane module and design the module with less membrane area.

The hydrophilized composite hollow fiber membrane is particularly suited as a water filtration membrane.

Also when the composite hollow fiber membrane is made by using a resin that has a particular length of isothermal crystallization time, the degree of crystal orientation and the size of the crystals can be controlled, thus making it possible to make the micropores of the desired sizes formed in the dense layer and in the support layer thereby stably improving both the water permeability and the separation accuracy.

The filtration life of the filter can be improved further, particularly by making the initial water permeability amount 25.0 L/(m$^2$ · hr · kpa) or higher.

According to the method of the present invention, the composite hollow fiber membrane described above can be produced easily and, by controlling the degree of crystal orientation in a particular range, the composite hollow fiber membrane of high performance described above can be produced reliably.

**Claims**

1. A composite hollow fiber membrane made by stacking three or more layers of membranes that have a three-dimensional net structure having a plurality of micropores formed from stacked lamella and microfibrils connected with the stacked lamella, wherein

   a dense layer, that is thinner than the outermost layer and the innermost layer and has micropores of a mean pore diameter smaller than that of the micropores of the outermost layer and the innermost layer, is disposed as an intermediate layer between the outermost layer and the innermost layer, while the composite hollow fiber membrane has overall porosity of not less than 75% by volume.

2. The composite hollow fiber membrane according to claim 1, wherein the isothermal crystallization time τs of the resin used for the outermost layer and the innermost layer and the isothermal crystallization time τp of the resin used for the dense layer satisfy the following relationship:

$$1 < \tau p/\tau s < 100.$$

3. The composite hollow fiber membrane according to claim 1, wherein the outermost layer and the innermost layer have a mean microfibril length in a range from 0.5 to 10 μm and mean distance between microfibril in a range from 0.1 to 0.6 μm.

4. The composite hollow fiber membrane according to claim 1, wherein the dense layer has a mean microfibril length in a range from 0.2 to 5 μm and a mean distance between microfibril in a range from 0.02 to 0.3 μm.

5. The composite hollow fiber membrane according to claim 1, wherein each of the outermost layer and the innermost layer has a thickness in a range from 5 to 50 μm.

6. The composite hollow fiber membrane according to claim 1, wherein the dense layer has a thickness in a range from 3 to 15 μm.

7. The composite hollow fiber membrane according to claim 1, wherein a cover layer of a hydrophilic polymer is formed and the microfibrils are divided into groups of a plurality of pieces that are bundled together.

8. The composite hollow fiber membrane according to any one of claims 1 to 7, wherein the initial water permeation amount is 25.0 L/(m$^2$ · hr · kPa) or higher.

9. A method of producing a composite hollow fiber membrane, which comprises co-extruding a molten crystalline polymer through a die having three or more discharge ports disposed in a concentric configuration; spinning the extruded fibers into a composite non-stretched hollow fiber comprising three or more layers being stacked; and stretching the fibers at a total stretching ratio of at least 5.

10. The method of producing the composite hollow fiber membrane of claim 9, which comprises co-extruding the molten crystalline polymer; spinning a composite non-stretched hollow fiber having in an outermost layer and an innermost layer a degree of crystal orientation fc in a range from 0.8 to 0.99 and in an intermediate layer a degree of crystal orientation fc in a range from 0.2 to 0.75; and stretching the fibers.

# FIG. 1

# FIG. 2

THE DIRECTION OF STRETCHING

# FIG. 3

# FIG. 4

# FIG. 5

# FIG. 6

# FIG. 7

EP 1 063 004 A1

## INTERNATIONAL SEARCH REPORT

| International application No. |
| --- |
| PCT/JP99/01245 |

**A. CLASSIFICATION OF SUBJECT MATTER**
Int.Cl⁶ B01D69/08, 69/12

According to International Patent Classification (IPC) or to both national classification and IPC

**B. FIELDS SEARCHED**

Minimum documentation searched (classification system followed by classification symbols)
Int.Cl⁶ B01D69/08, 69/12, 71/26

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Keisai Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 9-117643, A (Mitsubishi Rayon Co., Ltd.), 6 May, 1997 (06. 05. 97) (Family: none) | 1, 3-8 |
| X | Claim 2 ; Par. Nos. [0016] to [0023], [0028], [0035] to [0043] ; Table 1 | 9 |
| Y | JP, 3-169330, A (Mitsubishi Rayon Co., Ltd.), 23 July, 1991 (23. 07. 91) (Family: none) Claims | 1, 3-8 |
| A | JP, 3-296424, A (Mitsubishi Rayon Co., Ltd.), 3 December, 1991 (03. 12. 91) (Family: none) | 1-10 |

☐ Further documents are listed in the continuation of Box C.  ☐ See patent family annex.

| | |
| --- | --- |
| * Special categories of cited documents: | "T" later document published after the international filing date or priority |
| "A" document defining the general state of the art which is not considered to be of particular relevance | date and not in conflict with the application but cited to understand the principle or theory underlying the invention |
| "E" earlier document but published on or after the international filing date | "X" document of particular relevance; the claimed invention cannot be considered novel or cannot be considered to involve an inventive step |
| "L" document which may throw doubts on priority claim(s) or which is cited to establish the publication date of another citation or other special reason (as specified) | when the document is taken alone |
| "O" document referring to an oral disclosure, use, exhibition or other means | "Y" document of particular relevance; the claimed invention cannot be considered to involve an inventive step when the document is combined with one or more other such documents, such combination |
| "P" document published prior to the international filing date but later than the priority date claimed | being obvious to a person skilled in the art |
| | "&" document member of the same patent family |

| Date of the actual completion of the international search | Date of mailing of the international search report |
| --- | --- |
| 2 June, 1999 (02. 06. 99) | 15 June, 1999 (15. 06. 99) |

| Name and mailing address of the ISA/ Japanese Patent Office | Authorized officer |
| --- | --- |
| Facsimile No. | Telephone No. |

Form PCT/ISA/210 (second sheet) (July 1992)